# EUROPEAN PATENT APPLICATION

(11) **EP 1 017 000 A2**
(43) Date of publication of application: **05.07.2000**
(21) Application number: 99309831.8
(22) Date of filing: 07.12.1999
(51) Int. Cl.: G06F 17/60

(54) **Context-sensitive, content measured dynamic information linkage**

(30) Priority: 30.12.1998 US 223014
(71) Applicant: NCR INTERNATIONAL INC., Dayton, Ohio 45479 (US)
(72) Inventor: Chiang, Luo-Jen, Freehold, NJ 07728 (US); Papierniak, Karen A., Fenton, MI 48430 (US); Thaisz, James E., Lincroft, NJ 07738 (US)
(74) Representative: Cleary, Fidelma

(57) **Abstract**

A method and apparatus for determining, displaying and dynamically changing links displayed on a Web page is disclosed. Each link is designed with a context criteria, a content criteria and a presentation criteria. Based on past navigational history and context, content criteria, and presentation criteria, each link is related to other links on the same Web page. By varying context, content criteria, and presentation criteria, the clickability of each link can be estimated, varied and subsequently measured. Advantageously, the context, content and presentability can be varied dynamically and iteratively to improve the clickability of a selected link.

## Description

The present invention relates generally to an method and apparatus for presenting Internet data in a format meaningful to management and business operations, and more particularly, to a method and apparatus for analyzing Internet data, particularly the relationships and links allowing the inclusion of context-sensitive, content measurable dynamic information linkages.

The growth of the Internet has been exponential. By the end of 1996, there were 10 million hosts on the Internet that connected 105,000 networks to an estimated 32 million to 50 million worldwide Internet users. The numbers are doubling every year. Among the many segments of the Internet, advertising is becoming the one with the greatest growth. Advertising expenditure has been projected for the Internet to grow to $5 billion by the year 2000. With the advent of the new Internet World Wide Web (WWW) as an advertising medium, understanding how people process advertising on the WWW has become the critical demand of Web advertisers. Also with the development and information technology and networking infrastructure, more business transactions are being conducted electronically over the Internet. Using the Internet to conduct business transactions is now getting so popular that it is currently well known as electronic commerce (or Internet commerce). Electronic commerce is having an enormous impact on the way business will be conducted and managed in the future. Thus, there is a great interest in studying and understanding consumers' behavior and decision processes in the electronic commerce environment.

Business transactions have traditionally been conducted at business premises, and there exist methods and techniques to study consumer behavior and decision process for the traditional business environment. For example, a retailer can display its goods and store shelves arranged in accordance with the changes of the four seasons. By observing consumers' reactions to the arrangement, the retailer can adjust the layout of the shelves to facilitate sales of its goods.

In an electronic commerce environment, a retailer service provider typically displays information about its goods of services on a Web site (which includes at least one server) via the Internet. Specifically, the server for the Web site stores the information on a set of Web page files, such as HTML (hyper-text mark-up language) files. In addition to containing text content, an HTML file may also contain links to other types of files, such as graphic audio files, for displaying pictures and icons and playing audio messages. An HTML file may further contain links to other Web page files. The other type files can also be stored on the server. By using the Web browser, a customer (or a potential customer) can remotely navigate through the Web site, gain the information about the goods and services, or order selected goods and services. Unfortunately, unlike in traditional business environments, there is currently no reliable method in electronic commerce to measure the effectiveness of the layout of the Web site. This is due to the difficulties in observing consumers' behavior and analyzing consumers' decision processes over the Internet.

There are three major areas of concern in designing a Web site or Web page. The first area can be called "Web presentability". The second area can be called "Web linkability". The third area can be called "Web clickability".

Regarding Web presentability, it is becoming increasingly important to determine what separates the excellent sites from the others particularly as Web pages multiply on the Internet. Whether a Web page is presentable often is determined by whether the user feels comfortable interacting with the Web page displayed on the user's computer screen. Often a first impression is crucial because a user that encounters an unfriendly or unpresentable Web page is unlikely ever to return. If a user fails to click on an icon displayed on the Web page, the user fails to engage the Web page. A highly presentable Web page will engage the user causing the user to click through to another icon or Web page.

Regarding Web linkability, designing a highly presentable Web page goes beyond the specific page on the screen. It is the creation of a sense of place. Users want to have a good sense of where each link leads before the user commits to clicking on a link. So even if a Web page's presentation is good, without helpful cues as to its location or linkability in the Web site's organization, the Web page will probably alienate the user.

Regarding Web clickability, even good Web presentability and Web linkability are not sufficient if the user does not know how to travel - where to click, also called "clickability". Colors and shapes can improve clickability. Links can be in the form of graphics (such as clicking on a map) or can be in the form of text. The links can be banners or advertisements. Clickability can be improved using many different types of Web advertising (e.g., banner ads, paid hyperlinks, corporate site, personal sites with selling attempts, paid icons, etc.). Two current dominant forms are "banner ads" and "target ads" or linked sites from the banner ads.

Clickability can be measured based on past navigational history and actions such as that disclosed in either of the patent applications identified above or in U.S Patent No. 5,708,780. A navigational history includes a profile history and an action history. Actions mean that a user has, for example, purchased an item, searched for information or registered for a service by clicking on an item.. A profile means that a user has clicked on an icon regardless of the action associated with such an icon. For example, a server may, at any given time, track access history within a client-server session. Such a profile history or action history informs the service provider about link transversal frequencies and link paths followed by users. These histories or profiles are produced by filtering transaction logs from one or more servers to select only transactions involving a particular user ID. Two subsequent entries A and B, corresponding to requests from a given user in these logs represent a link traversal from a Web page containing document A to a Web page containing document B made by the user in question. This information may be used to identify the most popular links to a specific page and to suggest where to insert new links to provide more direct access. The access history or action history is evaluated to determine traversed links leading to a purchase of a product made within commercial pages. This information may be used, for example, to charge for advertising based on the number of link traversals from an advertising page to a product page or based on the count of purchases resulting from a path including the advertisement.

An Internet presence has become an integral part of most successful companies. However, the mere existence of a Web site does not guarantee a positive return on the investment made for a company's Web site. To turn the Web site into a positive return, a solution offered must answer business questions required to improve user response to an online offering whether considering content, advertising, or electronic commerce goods and services.

Internet-based businesses need to understand user response to their sites. Emerging technologies can now provide unique insight into user behavior. User behavior, as related to site content and services can be observed by watching the paths taken, the pages viewed, the links followed, and the actions taken by subscribers, shoppers, buyers and visitors. In the short term, this type of information is necessary for improving Web-site and services effectiveness. In the long term, warehousing this information enables the Internet Service Business (ISB) to understand on-line user behavior, preferences, and what drives user actions at a site. This is the key element to improving the user's response to the site and the ISB's profitability margins.

Current technology provides mechanisms to record access status data (or Internet data) for Web pages and other types of files while other types of files while a sequence of requests are being received and processed by a server. However, the current technology does not provide mechanisms to organize and present the Internet data based upon the context of the data and the content of the data and the behavior preference of the user. Thus, a need exists for determining why a link is traversed (based on appearance and content) so that the appearance of a Web page can be modified to persuade users to click on specific links.

It is an object of the present invention is to provide a method and apparatus for determining user preferences for clicking on a link on a Web page. history.

From one aspect, the present invention resides in a method of determining user preferences for a plurality of links on at least one Web page using stored navigational user history. The plurality of links are configured on the at least one Web page based on the context criteria, content criteria presentation criteria and the stored navigational user history. The navigational user history for the configured plurality of links are collected and stored. The links are reconfigured on the at least one Web page based on the context criteria, content criteria, presentation criteria and the navigational user history for the configured plurality of links.

In other words, each link is designed with a context criteria, a content criteria and a presentation criteria. Based on past navigational history and context, content criteria, and presentation criteria, each link is related to other links on the same Web page. By varying context, content criteria, and presentation criteria, the clickability of each link can be estimated, varied and subsequently measured. Advantageously, the context, content and presentability can be varied dynamically and iteratively to improve the clickability of a selected link.

The invention also resides in a computer architecture including configuring means for configuring the plurality of links on the at least one Web page based on context criteria, content criteria and the stored navigational user history. Collecting means are provided for collecting and storing navigational user history for the configured plurality of links. Reconfiguring means are provided for reconfiguring links on the at least one Web page based on the context criteria, content criteria, presentation criteria and the navigational user history for the configured plurality of links.

From a further aspect, the invention resides in a computer system including a processor and a memory coupled to the processor, the memory having stored therein sequences of instructions, which, when executed by the processor, causes the processor to perform the steps of configure the plurality of links on the at least one Web page based on context criteria, content criteria, presentation criteria and the stored navigational user history. The processor then collects and stores navigational user history for the configured plurality of links and reconfigures links on the at least one Web page based on the context criteria, content criteria, presentation criteria and the navigational user history for the configured plurality of links.

Embodiments of the present invention will now be described by way of example, with reference to the accompanying drawings, wherein elements having the same reference numeral designations represent like elements throughout and wherein:
Figure 1 illustrates a high level block diagram of a computer system usable with the present invention;
Figure 2 depicts an exemplary network system, including novel Internet data processing computer, in accordance with the present invention;
Figure 3 depicts an exemplary Web page associated with the Web page file;
Figure 4 depicts an actual Web page;
Figure 5 is a pie chart diagram illustrating relationships between information objects in accordance with the present invention;
Figure 6 illustrates direct and implied correlated links;
Figure 7 depicts Web pages with representations of icons and text;
Figure 8 depicts pie charts depicting real and perceived user preferences for information objects; and
Figure 9 depicts differences between text link clicks and reactive clicks.

The present invention is particularly suited for use on the Internet or Web. The Web is a method of accessing information on the Internet which allows a user to navigate the Internet resources intuitively, without IP addresses or other technical knowledge. The Web dispenses with command-line utilities which typically require a user to transmit sets of commands to communicate with an Internet server. Instead, the Web is made up of hundreds of thousands of interconnected "pages", or documents, which can be displayed on a computer monitor. The Web pages are provided by hosts running special servers. Software which runs these Web servers is relatively simple and is available on a wide range of computer platforms including PC's. Equally available is a form of client software, known as a Web "browser", which is used to display Web pages as well as traditional non-Web files on the client system.

The Web is based on the concept of "hypertext" and a transfer method known as "HTTP". HTTP is designed to run primarily over TCP/IP and uses the standard Internet setup, where a server issues the data and a client displays or processes it. One format for information transfer is to create documents using HTML. HTML pages are made up of standard text as well as formatting codes which indicate how the page should be displayed. Other interfaces such as the Common Gateway Interface (CGI) or Java can also be used.

Each Web page may contain pictures and sounds in addition to text. Hidden behind certain text, pictures or sounds are connections, known as "hypertext links" ("links"), to other pages within the same server or even on other computers within the Internet. For example, links may be visually displayed as words or phrases that may be underlined or displayed in a second color. Each link is directed to a Web page by using a special name called a URL. URL's enable a Web browser to go directly to any file held on any Web server. These links may be textual, graphical, contain images, pie charts, and video or audio.

### Hardware Overview

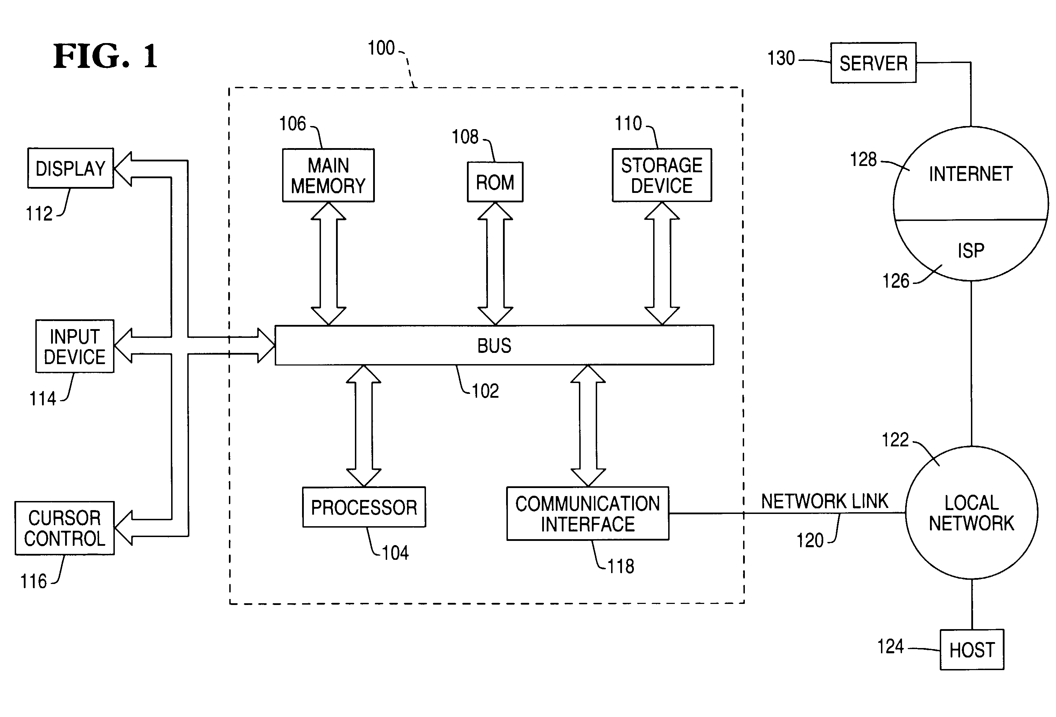

Figure 1 is a block diagram illustrating an exemplary computer system 100 upon which an embodiment of the invention may be implemented. The present invention is usable with currently available personal computers, mini-mainframes and the like.

Computer system 100 includes a bus 102 or other communication mechanism for communicating information, and a processor 104 coupled with the bus 102 for processing information. Computer system 100 also includes a main memory 106, such as a random access memory (RAM) or other dynamic storage device, coupled to the bus 102 for storing information and instructions to be executed by processor 104. Main memory 106 also may be used for storing temporary variables or other intermediate information during execution of instructions to be executed by processor 104. Computer system 100 further includes a read only memory (ROM) 108 or other static storage device coupled to the bus 102 for storing static information and instructions for the processor 104. A storage device 110, such as a magnetic disk or optical disk, is provided and coupled to the bus 102 for storing information and instructions.

Computer system 100 may be coupled via the bus 102 to a display 112, such as a cathode ray tube (CRT) or a flat panel display, for displaying information to a computer user. An input device 114, including alphanumeric and other keys, is coupled to the bus 102 for communicating information and command selections to the processor 104. Another type of user input device is cursor control 116, such as a mouse, a trackball, or cursor direction keys for communicating direction information and command selections to processor 104 and for controlling cursor movement on the display 112. This input device typically has two degrees of freedom in two axes, a first axis (e.g., x) and a second axis (e.g.,) allowing the device to specify positions in a plane.

The invention is related to the use of a computer system 100, such as the illustrated system, to determine, display and dynamically change user preferences for a plurality of links on a Web page. According to one embodiment of the invention, the invention is provided by computer system 100 in response to processor 104 executing sequences of instructions contained in main memory 106. Such instructions may be read into main memory 106 from another computer-readable medium, such as storage device 110. However, the computer-readable medium is not limited to devices such as storage device 110. For example, the computer-readable medium may include a floppy disk, a flexible disk, hard disk, magnetic tape, or any other magnetic medium, a CD-ROM, any other optical medium, punch cards, paper tape, any other physical medium with patterns of holes, a RAM, a PROM, an EPROM, a FLASH-EPROM, any other memory chip or cartridge, a carrier wave embodied in an electrical, electromagnetic, infrared, or optical signal, or any other medium from which a computer can read. Execution of the sequences of instructions contained in the main memory 106 causes the processor 104 to perform the process steps described below. In alternative embodiments, hard-wired circuitry may be used in place of or in combination with computer software instructions to implement the invention. Thus, embodiments of the invention are not limited to any specific combination of hardware circuitry and software.

Computer system 100 also includes a communication interface 118 coupled to the bus 102. Communication interface 108 provides a two-way data communication as is known. For example, communication interface 118 may be an integrated services digital network (ISDN) card or a modem to provide a data communication connection to a corresponding type of telephone line. As another example, communication interface 118 may be a local area network (LAN) card to provide a data communication connection to a compatible LAN. In the preferred embodiment communication interface 118 is coupled to a virtual blackboard. Wireless links may also be implemented. In any such implementation, communication interface 118 sends and receives electrical, electromagnetic or optical signals which carry digital data streams representing various types of information. Of particular note, the communications through interface 118 may permit transmission or receipt of context criteria, content criteria and past navigational history. For example, two or more computer systems 100 may be networked together in a conventional manner with each using the communication interface 118.

Network link 120 typically provides data communication through one or more networks to other data devices. For example, network link 120 may provide a connection through local network 122 to a host computer 124 or to data equipment operated by an Internet Service Provider (ISP) 126. ISP 126 in turn provides data communication services through the world wide packet data communication services through the world wide packet data communication network now commonly referred to as the "Internet" 128. Local network 122 and Internet 128 both use electrical, electromagnetic or optical signals which carry digital data streams. The signals through the various networks and the signals on network link 120 and through communication interface 118, which carry the digital data to and from computer system 100, are exemplary forms of carrier waves transporting the information.

Computer system 100 can send messages and receive data, including program code, through the network(s), network link 120 and communication interface 118. In the Internet example, a server 130 might transmit a requested code for an application program through Internet 128, ISP 126, local network 122 and communication interface 118. The server 130 is another computer system which may have the same architecture as computer system 100. In accordance with the invention, one such downloaded application provides for information discovery and visualization as described herein.

The received code may be executed by processor 104 as it is received, and/or stored in storage device 110, or other non-volatile storage for later execution. In this manner, computer system 100 may obtain application code in the form of a carrier wave.

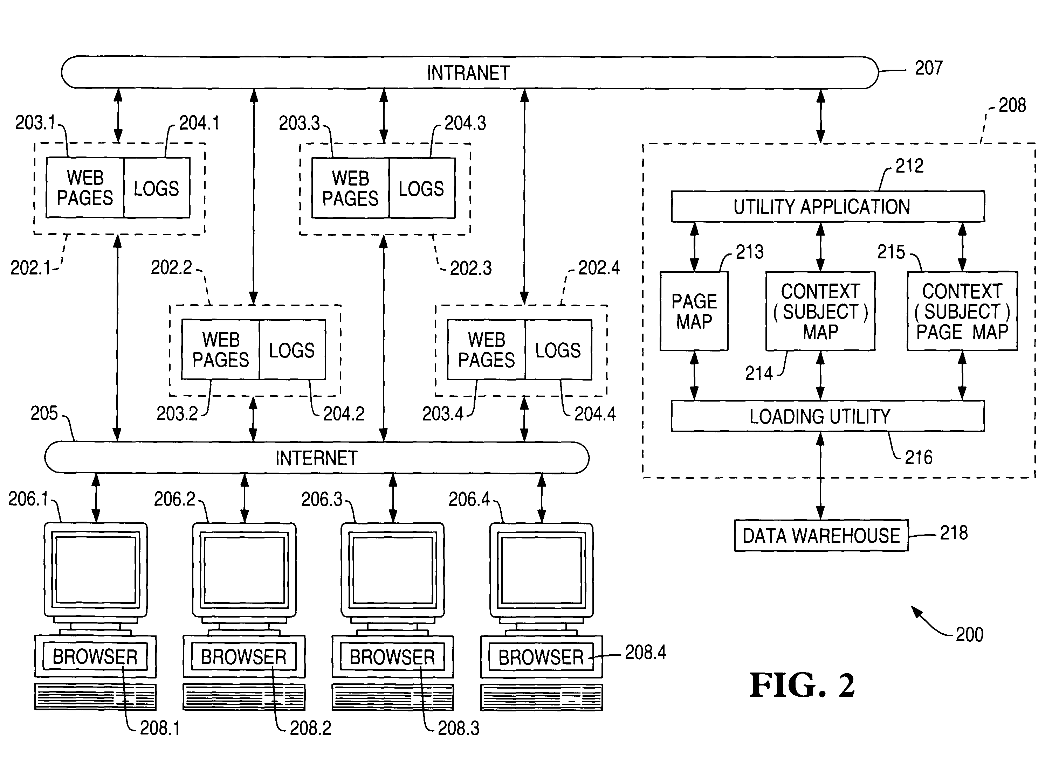

Referring to Figure 2, there is shown an exemplary network system 200 including Internet 205 and Intranet (or LAN - Local Area Network) 207, accordance with the present invention.

Connected to Internet 205 are four servers (202.₁, 202.₂, 202.₃ and 202.₄) for four respective Web sites and four user terminals or computers (206.₁, 206.₂, 206.₃ and 206.₄). Connected to Intranet 207 are four servers (202.₁, 202.₂, 202.₃ and 202.₄) and a data processing computer 208. Connected to data processing computer 208 is a data warehouse 218. It should be noted that, in describing the present invention, Figure 1 shows that only four servers and four user computers are connected to Internet 205. In reality, Internet 205 connects thousands of servers and user computers.

Each of the four servers (202.₁, 202.₂, 202.₃ or 202.₄) includes a respective Web page repository (203.₁, 203.₂, 203.₃ or 203.₄) and a respective set of server logs (204.₁, 204.₂ 204.₃ or 204.₄). Each of the four Web page repositories (203.₁, 203.₂, 203.₃ or 203.₄) stores a plurality of Web page files (such as HTML, SHTML, DHTML or CGI files). A Web page file may contain links to other type files (such as AVI, GIF, JPEG, and PNG files). (Note: HTML stands for Hypertext Markup Language, SHTML for Secure HTML, DHTML for Dynamic HTML, CGI for Common Gateway Interface, GIF for Graphics Interchange Format, JPEG for Joint Photographic Expert Group, AVI for Audio Video Interleave, and PNG for Portable Network Graphic). The other type files are also stored in one of the four servers. Each of the four sets of server logs (204.₁, 204.₂, 204.₃ or 204.₄) contains access status data (or Internet data) indicating access status for the files that have been accessed, or attempted to be accessed.

Each of the four user computers (206.₁, 206.₂, 206.₃ or 206.₄) runs a respective Web browser (208.₁, 208.₂, 208.₃ or 208.₄) each of which is able to obtain files from any one of the four servers via Internet 205, and displays these files in a Web page format. To obtain a Web page file from a server, a Web browser sends a Get request to that server. A Get request contains the IP address identifying the user computer on which the browser is being run and a URL. The URL contains the name of and path to the Web page file. Upon receiving the Get request, the server retrieves the Web page file according to the URL in the Get request and sends the Web page file to the user computer (on which the browser is being run) identified by the IP address in the Get request. The server then records access status data for the Web page file in a server log. Upon receiving the Web page file, the Web browser displays it as a Web page. If the Web page files also contains links to other type files, the browser further sends Get requests to the server, so that these files can be obtained and displayed together with the Web page file. The links embedded in the Web page file contain the names of and paths of these files. After sending these files to the browser, the server records access status data for these files in the server log. If the Web page file further contains a link to another Web page file, clicking (activating) the link, the browser sends a Get request to the server, so that the Web page file can be obtained and a new Web page can be displayed. This link contains the name of and path to the Web page file. After sending this Web page file to the user computer (on which the browser is being run), the server records access status data for the Web page file in the server logs.

It should be noted that in Figure 2 browsers (208.₁, 208.₂, 208.₃ and 208.₄) interact with servers (202.₁, 202.₂, 202.₃, 202.₄) in a stateless fashion. The Web browsers (208.₁, 208.₂, 208.₃ and 208.₄) send requests to servers (202.₁, 202.₂, 202.₃ and 202.₄) in a random manner. While a browser (208.₁, 208.₂, 208.₃ and 208.₄) is sending a sequence of requests to a server (202.₁, 202.₂, 202.₃ or 202.₄), it does not maintain a constant connection to that server between any two consecutive requests. To a server, it has no control over the sequences of requests; a subsequent request may not have any logical relationship with the previous one; a sequence of requests may come from different Web browsers; a request may be generated from a link embedded in a Web page file. Consequently, the Internet data are kept as a set of separate and non-correlated data records that are chronologically generated according to the times at which the requests were received and processed. Thus, the Internet data stored in the four sets of server logs (204.₁, 204.₂, 204.₃ and 204.₄), without further processing, are not meaningful to management and business operation.

As depicted in Figure 2, data processing computer 208 contains a utility application 212, a page map 213, a context (subject) map 214, a context (subject) page map 215 and a loading utility 216. Via Intranet 207, utility application 212 is able to get access to the four sets of server logs (204.₁, 204.₂, 204.₃ and 204.₄), to collect data from them to process the data collected, and to store the processed data in page map 213, context map 214, and context page map 215. Loading utility 216 is able to load the data from page map 213, context map 214 and context page map 215 to data warehouse 218 for further processing.

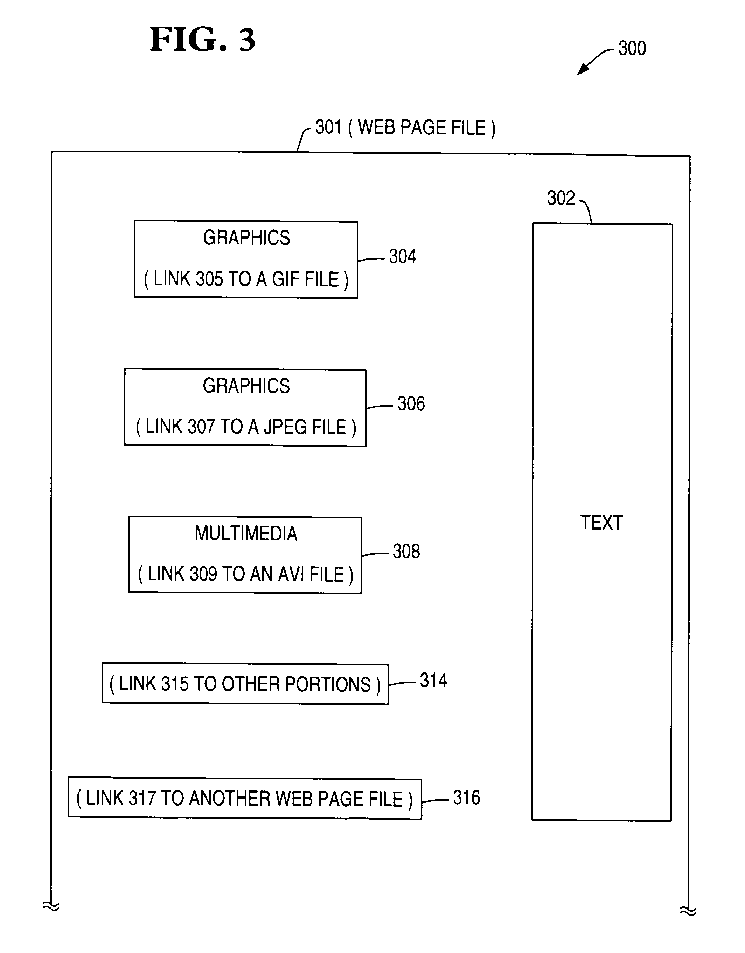

Referring to Figure 3, there is shown a portion of a Web page 300, which is associated with a Web page file (HTML, SHTML, DHTML or CGI file) 301. As depicted in Figure 3, the portion of Web page 300 contains six regions, including: a text region 302, a graphics region 304, which is associated with a link 305 to a GIF file, a graphic region 306, which is associated with a link 307 to a JPEG file; a multimedia region 308, which is associated with a link 309 to an AVI file, a region 314, which is associated with link 315 to other portions of Web page 300, and a region 316, which is associated with a link 317 to another Web page file. Links 305, 307, 209, 315 and 317 are embedded in Web page file 301.

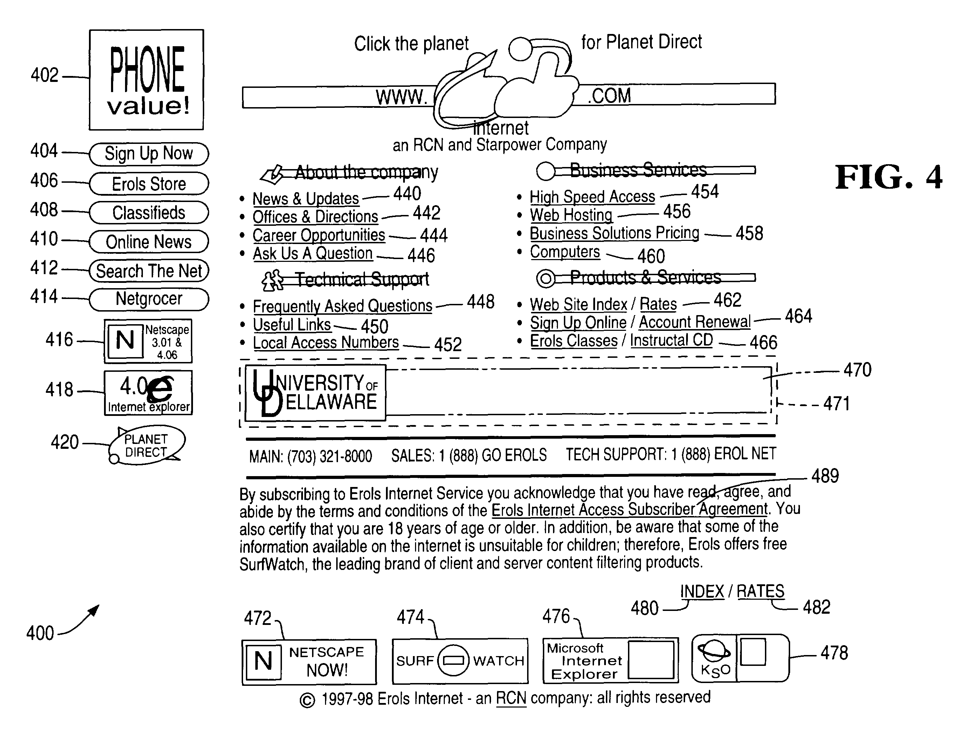

An actual Web page from an actual Internet site called "Erols Internet" is depicted in Figure 4 which includes the various links described with respect to Figure 3. As depicted in Figure 4, the Web page 400 includes a flashing moving box 402 having text "phone value" and a plurality of buttons 404 including sign up now text, 406 including Erols store text, 408 including classifieds text, 410 including online news text, 412 including search the Net text and 414 including Netgrocer text. A Netscape browser icon 416 and an Internet explorer icon 418 are linked to the Netscape and Microsoft Web sites, respectively. A Planet Direct link 420 is a flashing link. A plurality of textual links include a news and updates link 440, an offices and directions link 442, a career opportunities link 444, an ask us a question link 446, a frequently asked questions link 448, a useful links link 450, a local access numbers link 452, a high speed access link 454, a Web hosting link 456, a business solutions pricing link 458, a computers link 460, a Web site index/rates 462, a sign up online/account renewal link 464, an Erols classes/instructional CD-link 466.

A flashing ad for the University of Delaware is depicted at 470 in a central portion of the Web page 400. Another icon to the Netscape site is depicted at 474 and a surf watch icon is depicted at 474. Another Microsoft Internet explorer icon is at the bottom of the Web page at 476 and a K56 button is at 478. A textual index link is at 480 and a rate index link is adjacent thereto at 482. In the middle of a subscriber acknowledgment textual paragraph above the buttons 472-478 is a textual link called Erols Internet Access Subscriber Agreement 484. The navigational history and the action history for this Web page is stored according to the present invention.

Each of the links or objects on the Web page depicted in Figure 4 can be defined by three characteristics. The first characteristic is context criteria, the second characteristic is content criteria and the third characteristic is presentation criteria. The context criteria includes the concept which is the overall feeling or layout of the Web page and the overall feeling and placement for each of the links. The context criteria also includes meaning of the object. For example, if the object says windows, the meaning could be directed to a framework for a pane of glass, such as Anderson windows, or for a software program such as Windows 98. The context characteristic also includes how much or how many links are on a particular page which are linked to another Web page or site. Another context characteristic is the importance of the information either as perceived by the owner of the Web site or by the user browsing Web site. The last context criteria is whether the information contained in the link is contained in an individual link or is collectively contained in several links on the same Web page.

The second characteristic is the content criteria. The content includes text, graphics and video images that are used to present the content contained in the link.

The third characteristic is the presentation criteria. The presentation criteria includes the angle, color, depth, width, height, coordinates, the movement associated with the link, the attention associated with the link (flashing), the experience related to the link (for example, sound or video), the urgency of the link (for example, sale item or time stamped item), recognition associated with name brands, direction of the link (up/down), whether the link is highlighted and the details of the link (not clustered).

Each of the characteristics is used to measure the clickability of the link. For example, with reference to Figure 4, the phone value link 402 has a different context than the textual link 440 called news and update. The phone value link has a different feel than the static textual link 240. The phone value link 402 has a different meaning than textual link 440. The number of links for phone value 402 is the same as the number of links for the news and updates link 440. The number of links, however, for Netscape Navigator 416, 472 and Internet Explorer 418, 476 are higher than the number of links for phone value 402 or textual link news and updates 440. The context would be ranked according to site, for example, for a business site, the context would ranked according to the clarity, size and placement of the text on the Web page. For an entertainment site, the context would be ranked according to the movement and size of icons or banners.

The content criteria varies depending on the text and graphics of the link. For example, the content criteria depends on the number of lines of text or the level of detail of the text.

The presentation criteria varies depending on the type of link. For example, link 470 for the University of Delaware has high content level because of the size and color and coordinates (central placement on the Web page) of the link. Although not illustrated in Figure 4, the University of Delaware link 470 can scroll across the screen and changes over time. The University of Delaware link 470 can be clicked proximately by the box outlined by reference numeral 471. Thus, as depicted in Figure 4, the link 470 need not be directly clicked on but rather can be proximately clicked.

In terms of weighting each of the links, for example, in Figure 4, for the highest three weighted icons, it might be expected that the context criteria would be weighted in the following order based on perceived importance: Frequently Asked Questions 448, Local Access 452 and Erols Store 406. It might be expected that content criteria would be weighted as follows: Classifieds 408 as the highest and then Online/news 410 and then Search the Net 412. It might be expected that presentation criteria would be ranked with University of Delaware icon 470 highest and then the phone value icon 402 and then the Netscape 416, 472 or Internet Explorer 418, 476 icons.

For each of the characteristics there is an identification aspect. The identification aspect is related to the particular Web page on which an icon is displayed. A highly weighted link might be located on a launch page whereas a lower weighted link might be located on a detail page requiring a click from the launch page. Each characteristic also has a presentation aspect including size and location of the icon on a specific Web page and this aspect is most heavily weighted by size. For each characteristic there is also an action aspect. The action aspect is related to the type of action taken by clicking on a link. For example, a click may cause a purchase to be made, a search to be conducted and may cause immediate response to be made by the user. Each of the aspects is used for Web page design including Web page layout.

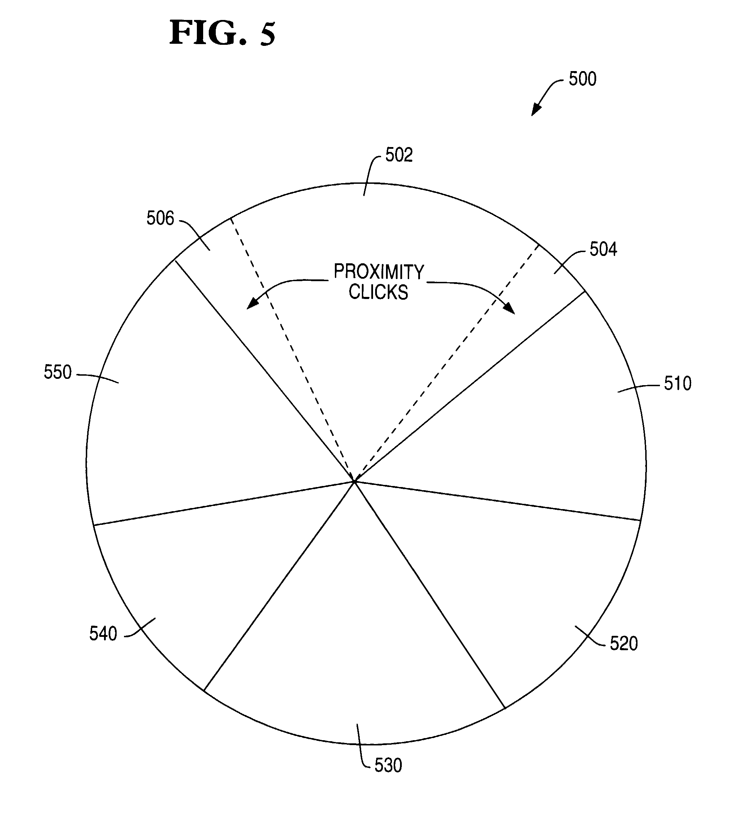

Referring now to Figure 5, a pie chart is depicted illustrating presentation between six links, as displayed on a Web page. Any of the links can be clicked on for causing an action to be taken. Pie segment 502 includes proximity click portions 504 and 506. Pie segments 510, 520, 530, 540, 550 are all equally weighted and pie segment 502 is weighted higher because it is larger. As depicted in Figure 5, it is most likely that link 502 will be clicked on. Proximity click areas 504, 506 correspond to the area 471 surrounding link 470. Figure 5 can be used to display the presentation between the links and how each link is weighted by context and content.

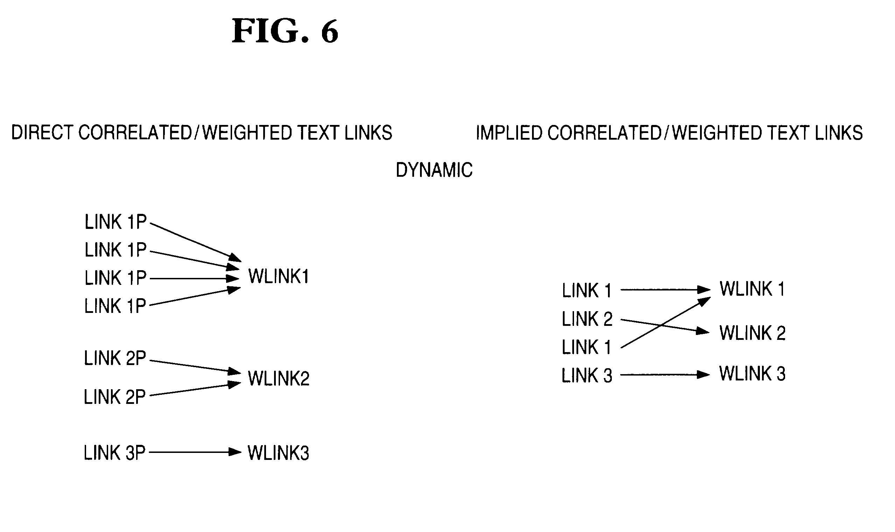

Referring now to Figure 6, two methods of weighting each of the links is depicted. The links are weighted and can be either directly correlated or impliedly correlated to the Web link. On the left hand side of Figure 6, there are four link IP link to Web link 1. Web link 1 is the most highly weighted link because it has the most pointers associated with Web link 1. Web link 2 is the next highly weighted Web link having two pointers 2P. On the right hand side of Figure 6 is the implied correlated linkage in which each of the Web links is individually weighted. The direct correlated links have to do with the physical characteristics or layout of the page, whereas the implied correlated links have to do with the previous navigational history or business goals. The weighted links direct users to a specific link by sheer number of links or previous navigational or business goals for the site.

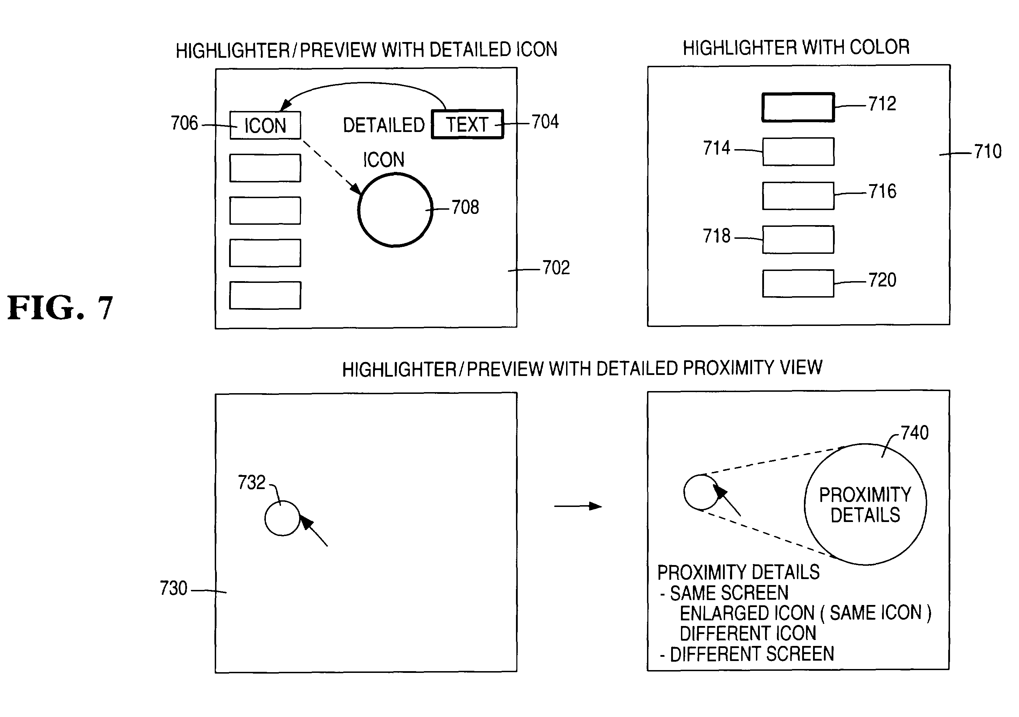

Figure 7 illustrates how context criteria can be used to manipulate a Web page. Screen 702 includes a textual icon 704 linked to a graphical icon 706 which in turn is linked to a detailed icon 708. Clicking on textual icon 704 leads to icon 706. Clicking on textual icon 706 leads to detailed icon 708. Alternatively, clicking on textual icon 704 can lead directly to display of the detailed icon 708. As depicted in Figure 5, a screen 710 includes links 712, 714, 716, 718, 720. Link 712, because it is highlighted, may be the most likely link in which a person viewing screen 710 would click on.

Screen 730 depicts an icon 732. By clicking on icon 732, screen 730 is changed to include a proximity detail display 740. Proximity details display 740 can be on the same screen, can be an enlarged icon of icon 732, or it could be a different icon than icon 732. Alternatively, icon 740 can be displayed on a different screen from screen 730.

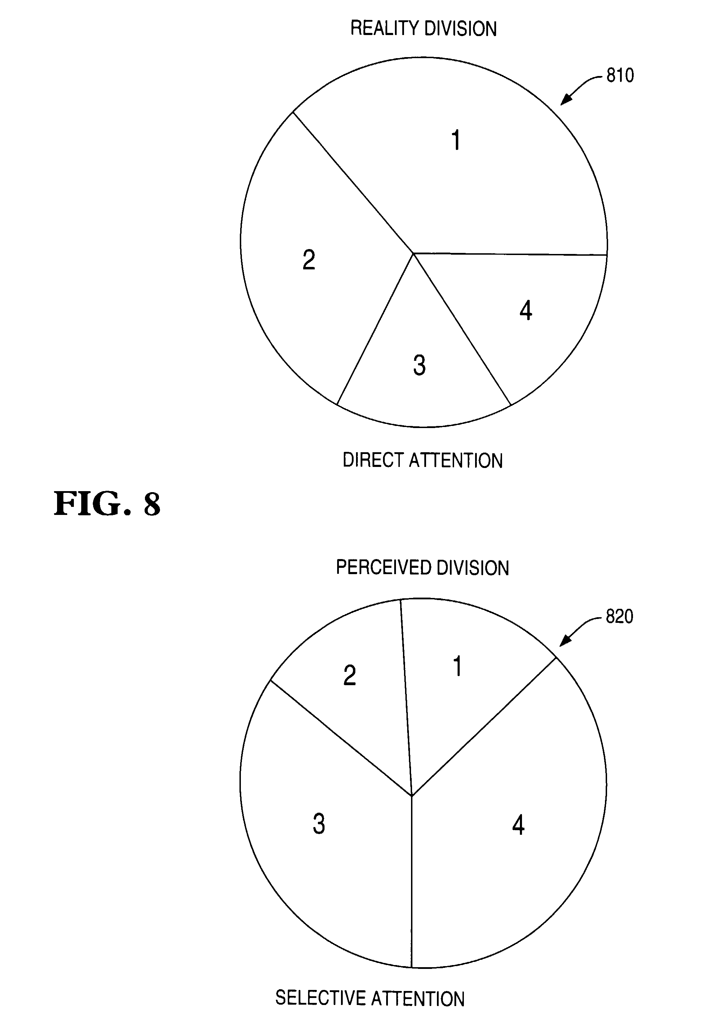

Figure 8 depicts two pie charts 810 and 820. Direct attention is where the number of links or size of icon directly represents the amount of information or products on the Web site. Selective attention is where certain links are emphasized by size because of user history or business goals. The size of the link would be adjusted accordingly. If one were looking at amazon.com and books is clearly the highest weight, but it was desirable to sell audio tapes on the Web page, audio tapes could be emphasized using, for example, a pop-up flashing banner on the launch page. As depicted in Figure 8, there is a difference between what the user's choices would be as opposed to what the user actually chose. For example, pie segment 4 in the perceived division was perceived to be the most likely link to be selected by a user. In reality, link 1 turned out to be the most highly clicked on link. Link 4 would have been emphasized using various content criteria, including angle, color and so forth to entice the user to select link 4. Even with such content criteria being emphasized, in reality, the context criteria turned out to be more important than the content criteria. Referring back to Figure 2, in this example, link 4 might have been the University of Delaware link 470 which is the most highly emphasized link in Figure 4. Link 1 may have been either a button link or a textual link which were not highly emphasized. Yet in reality, it turns out that the content in this example turns out to be more important than the context.

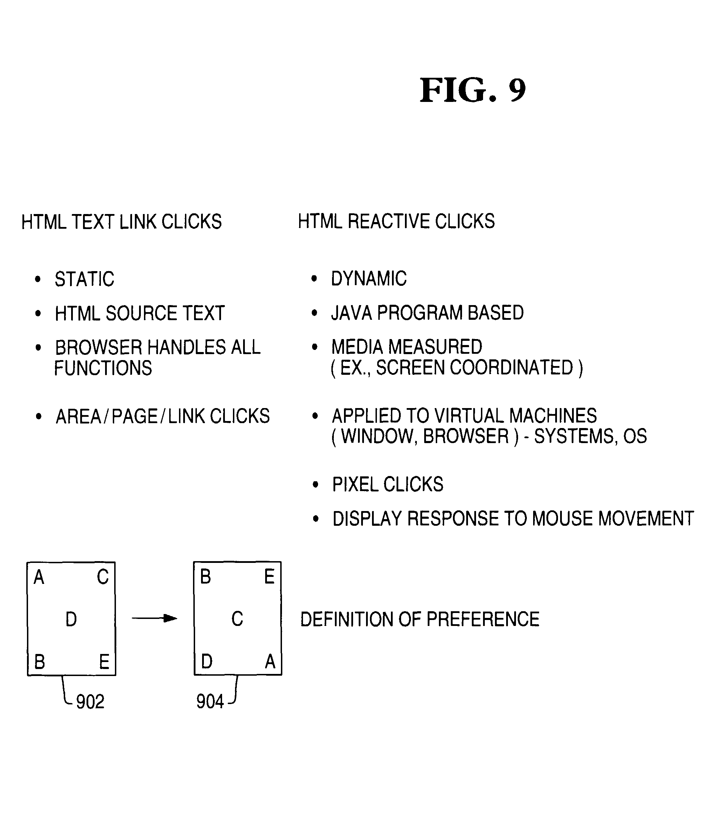

Regarding Figure 9, reactive clicks A, B, C, D, E are depicted. As depicted on a screen 902, the links A, B, C, D, E are depicted in first locations and in a screen 904 in a second location. A reactive click is one in which, based on past history, the display will be changed. For example, a click may change the way or location of icons displayed on a Web page. For example, a Web page can be zoomed in or out in response to a click. The implementation of context, content criteria sensitive links requires reactive clicks. Static links require the reprogramming of the web page to iteratively change the context, content or presentation of links on the Web page. The browser handles all of the functions on the Web page. The clicks are limited to area/page/link clicks. Static links cannot be changed in real time.

The table in Figure 9 lists the difference between static text clicks and dynamic reactive clicks. Past navigational history or past identification of user preferences are needed as a feedback mechanism to change the size or location of a link. The dynamic clicks are media measured (e.g., screen coordinated). The dynamic clicks can be applied to virtual machines (window, browser), systems and other operating systems. The clicks can be pixel clicks which have fine granularity. The display can also be updated using mouse movement. The dynamic clicks are preferably Java based and permit the link representations to be changed or modified in real time according to the present invention. The Web pages depicted in Figure 9 can also be displayed using pie charts as discussed previously.

It will be readily seen by one of ordinary skill in the art that the present invention fulfills all of the objects set forth above. After reading the foregoing specification, one of ordinary skill will be able to affect various changes, substitutions of equivalents and various other aspects of the invention as broadly disclosed herein. It is therefore intended that the protection granted hereon be limited only by the definition contained in the appended claims and equivalents thereof.

## Claims

1. A method of determining user preferences for a plurality of links on at least one Web page using stored navigational user history, comprising:
configuring the plurality of links on the at least one Web page based on context criteria, content criteria and the stored navigational user history;
collecting and storing navigational user history for the configured plurality of links; and
reconfiguring links on the at least one Web page based on the context criteria, content criteria and the navigational user history for the configured plurality of links.

2. The method of claim 1, wherein said reconfiguring step is performed in real time.

3. The method of claims 1 or 2, wherein said reconfiguring step is performed using Java.

4. The method of claim 1, wherein said configuring step comprises weighting each of the plurality of links based on context criteria, content criteria, presentation criteria and perceived criteria;

5. The method of claim 4, further comprising the step of displaying relationships between each of the plurality of links based upon the relative locations of the links and the weighting of the links, each of the relationships indicative of Web user behavior and preference.

6. The method of claim 4, wherein the perceived criteria uses the stored navigational history to weight each of the plurality of links.

7. The method of any preceding claim, wherein the context criteria includes concept, meaning, how much, importance of information and whether information is individual or collectively contained in the link.

8. The method of any preceding claim, wherein the content criteria includes angle, color, depth, width, height, coordinates, movement, attention, experience, urgency, recognition, direction (up/down), highlight and details.

9. The method of any preceding claim, wherein each of the links has an identification aspect, a presentation aspect and an action aspect.

10. The method of claim 9, comprising relating the identification and presentation aspects to the action aspect.

11. The method of claim 9, wherein each of the aspects has an appearance component and an execution component

12. The method of claim 11, wherein the appearance component is one of a physical characteristic of the link and a perceived characteristic of the link.

13. The method of claim 11, wherein the execution component is one of a directly correlated physical approach and an implied correlated virtual approach.

14. The method of claim 7, wherein the concept is the overall feeling of the Web page.

15. The method of any preceding claim, wherein the navigational history includes which links were clicked on by a customer browsing the at least one Web page.

16. The method of any preceding claim, wherein each of the links can be directly clicked or proximately clicked.

17. The method of any preceding claim 1, wherein each of the plurality of links has an information linkage.

18. The method of claim 4, wherein the displayed relationships or the links are depicted in the form of a pie chart, each of the plurality of links being depicted as a pie segment of the pie chart.

19. The method of claim 1, further comprising storing further navigational history for the plurality of links.

20. The method of claim 19, further comprising displaying perceived relationships between each of the plurality of links based on the further navigational history.

21. A computer architecture, comprising:
configuring means for configuring the plurality of links on the at least one Web page based on context criteria, content criteria and the stored navigational user history;
collecting means for collecting and storing navigational user history for the configured plurality of links; and
reconfiguring means for reconfiguring links on the at least one Web page based on the context criteria, content criteria, presentation criteria and the navigational user history for the configured plurality of links.

22. A computer system, comprising:
a processor; and
a memory coupled to said processor, the memory having stored therein sequences of instructions, which, when executed by said processor, causes said processor to perform the steps of:
configuring the plurality of links on the at least one Web page based on context criteria, content criteria, presentation criteria and the stored navigational user history;
collecting and storing navigational user history for the configured plurality of links; and
reconfiguring links on the at least one Web page based on the context criteria, content criteria, presentation criteria and the navigational user history for the configured plurality of links.
